# EUROPEAN PATENT APPLICATION

(11) **EP 4 604 217 A1**
(43) Date of publication of application: **20.08.2025**
(21) Application number: 23891754.6
(22) Date of filing: 21.07.2023
(51) Int. Cl.: H01M 4/62, H01M 4/134, H01M 4/1395, H01M 4/38, H01M 4/48, H01M 4/587, H01M 10/052, H01M 4/02

(54) **ANODE FOR LITHIUM SECONDARY BATTERIES AND LITHIUM SECONDARY BATTERY COMPRISING SAME**

(30) Priority: 17.11.2022 KR 20220154076
(71) Applicant: SK On Co., Ltd., Seoul 03161 (KR)
(72) Inventor: EOM, Ki-Joo, Daejeon 34124 (KR); KIM, Jae-Ram, Daejeon 34124 (KR); NA, Ji-Won, Daejeon 34124 (KR); BAE, Sang-Won, Daejeon 34124 (KR); BAE, Ji-Hee, Daejeon 34124 (KR); SONG, Yeon-Hwa, Daejeon 34124 (KR); LEE, Myung-Ro, Daejeon 34124 (KR); LEE, Yong-Seok, Daejeon 34124 (KR); LEE, Jae-Yeong, Daejeon 34124 (KR); JANG, Hyun-Joong, Daejeon 34124 (KR)
(74) Representative: Stolmár & Partner Patentanwälte PartG mbB
(86) International application number: PCT/KR2023/010555
(87) International publication number: WO 2024/106680

(57) **Abstract**

The anode for lithium secondary batteries according to the present disclosure includes: an anode current collector; and an anode composite layer, containing a silicon-based anode active material and a binder, on the anode current collector, wherein the binder is a crosslinked polymer having an ester bond, and has a melting enthalpy (ΔHₘ) of 230 J/g or higher as measured by differential scanning calorimetry (DSC).

## Description

### Technical Field

The present disclosure relates to an anode for lithium secondary batteries having improved adhesive ability and superior lifespan characteristics, and a lithium secondary battery including the same.

### Background Art

Recently, as the demand for electronic devices such as mobile devices and the like has increased, the development of lightweight and miniaturized electrochemical batteries (secondary batteries) to increase the portability of electronic devices is expanding. In addition to this trend, as regulations on automobile fuel efficiency and exhaust gases are being strengthened worldwide, the growth of the electric vehicle (EV) market is accelerating, and the development of high-output, high-capacity batteries for use in such electric vehicles is required.

Examples of secondary batteries may include lithium secondary batteries, nickel-cadmium batteries, nickel-hydrogen batteries, and the like, and thereamong, lithium secondary batteries are actively being developed and applied because they have high operating voltages and energy density per unit weight, and are advantageous in terms of charging speed and weight reduction.

Here, the lithium secondary battery may include an electrode assembly including a cathode, an anode, and a separator, and an electrolyte impregnating the electrode assembly. The lithium secondary battery may further include a case that accommodates the electrode assembly and the electrolyte, and the case may be, for example, a pouch or a prismatic or cylindrical can.

Recently, as the application target of the lithium secondary battery has expanded, development of lithium secondary batteries with higher capacity and output is in progress. For example, cathode or anode materials that may provide higher capacity are being researched.

As an anode material for lithium secondary batteries, carbon-based anode materials with excellent cycle characteristics and a theoretical capacity of 372 mAh/g have been generally used. However, as secondary batteries such as medium and large-sized secondary batteries or the like are gradually required to have higher capacity, inorganic anode materials such as silicon (Si), germanium (Ge), tin (Sn), antimony (Sb) or the like with a capacity of 500 mAh/g or more, which may replace the theoretical capacity of carbon-based anode materials, are attracting attention. Among these inorganic anode materials, silicon-based anode materials exhibit a very large lithium binding capacity.

However, the silicon-based material may cause shrinkage/expansion phenomena according to repeated charge/discharge, which may cause peeling of the anode active material layer, side reactions with the electrolyte, or the like. In addition, mechanical and chemical defects may occur during high-temperature storage or high-temperature operation, which may deteriorate the lifespan characteristics of the secondary battery.

In addition, the anode is typically manufactured by a method of mixing an anode active material such as silicon or the like, a conductive material, and a binder to manufacture an anode composite layer, and then applying this composite layer to an electrode current collector such as copper foil or the like, drying, and rolling.

### Summary of Invention

### Technical Problem

An aspect of the present disclosure is to provide an anode for a lithium secondary battery in which expansion of a silicon-based anode active material during charging and discharging of a lithium secondary battery may be suppressed, adhesion between an anode composite layer and an anode current collector may be improved, increase in resistance due to charge and discharge of the battery may be suppressed even when manufactured with high capacity and high energy density, and lifespan characteristics of the battery may be improved.

According to another aspect of the present disclosure is to provide a lithium secondary battery including the anode for a lithium secondary battery.

### Solution to Problem

According to an aspect of the present disclosure, an anode for a lithium secondary battery includes an anode current collector; an anode composite layer including a silicon-based anode active material and a binder on the anode current collector, wherein the binder is a crosslinked polymer including an ester bond and has a melting enthalpy (ΔHₘ) of 230 J/g or higher, measured by differential scanning calorimetry (DSC).

The binder may have a first absorbance peak appearing at 1725 to 1745 cm⁻¹ and a second absorbance peak appearing at 1745 to 1760 cm⁻¹ in an FT-IR spectrum.

The binder may be a crosslinked product of polyvinyl alcohol (PVA) and polyacrylic acid (PAA).

A molar ratio of polyvinyl alcohol and polyacrylic acid included in the crosslinked product may be 1:0.6 to 1:1.2.

The binder may further include one or more polymers selected from the group consisting of polyvinyl alcohol, polyacrylic acid, polyvinyl acrylic, polyacrylonitrile, polyacrylamide, and polyvinyl acetate.

The silicon-based anode active material may include silicon (Si), a silicon alloy, silicon oxide, a silicon-carbon (Si-C) composite, a silicon alloy (Si-alloy)-based carbon composite, or a mixture thereof.

The anode composite layer may further include a carbon-based anode active material.

The carbon-based anode active material may be at least one selected from the group consisting of artificial graphite and natural graphite.

The anode composite layer may further include a conductive material.

The conductive material may be at least one selected from the group consisting of a single-walled carbon nanotube (SWCNT), a thin-walled carbon nanotube (TWCNT), a multi-walled carbon nanotube (MWCNT), carbon fiber, and graphene.

A thickness of the anode composite layer may be 80 to 130 µm.

According to an aspect of the present disclosure, a lithium secondary battery includes the anode for a lithium secondary battery; a cathode; and a separator provided between the anode and the cathode.

### Advantageous Effects of Invention

According to an embodiment of the present disclosure, expansion of a silicon-based anode active material during charging and discharging of a lithium secondary battery may be suppressed.

According to an embodiment of the present disclosure, lifespan characteristics of a lithium secondary battery may be improved.

According to another embodiment of the present disclosure, a high-capacity and high-energy density battery having excellent lifespan characteristics may be manufactured.

### Brief Description of Drawings

FIG. 1 is a graph illustrating a differential scanning calorimetry (DSC) curve of a binder specimen manufactured in an example of an embodiment.
FIG. 2 is a graph comparing the melting enthalpy (ΔHₘ) values of a binder specimen manufactured in an example of an embodiment.
FIG. 3 is a graph illustrating the results of an FT-IR analysis of a binder specimen manufactured in an example of an embodiment.
FIG. 4 is a graph illustrating the relative intensity of the results of an FT-IR analysis of a binder specimen manufactured in an example of an embodiment.
FIG. 5 is a graph illustrating the results of an SAICAS analysis of an anode manufactured in an example of an embodiment.

### Best Mode for Invention

Hereinafter, the present disclosure will be described in detail (with reference to the attached drawings). However, this is merely illustrative and the present disclosure is not limited to the specific embodiments described as illustrative.

### Anode for Lithium Secondary Battery

An embodiment provides an anode for a lithium secondary battery, which includes an anode current collector; and an anode composite layer including a silicon-based anode active material and a binder on the anode current collector, and the binder is a crosslinked polymer including an ester bond, and has a melting enthalpy (ΔHₘ) of 230 J/g or higher as measured by differential scanning calorimetry (DSC).

The silicon-based anode active material may include silicon (Si), a silicon alloy, a silicon oxide, a silicon-carbon (Si-C) composite, a silicon alloy (Si-alloy)-based carbon composite, or a mixture thereof. The Si-C composite has high capacity and low resistance characteristics compared to existing silicon oxide-based active materials. In addition, the Si-C composite has silicon inside a structure similar to graphite, so it may alleviate the phenomenon of electrode cracks occurring due to volume expansion of an active material including a silicon-based oxide, and secure conductivity. In addition, the silicon-based active material may include SiOx (0<x<2).

Therefore, an embodiment includes a binder that is a crosslinked polymer including an ester bond and has a melting enthalpy (ΔHₘ) of 230 J/g or higher as measured by differential scanning calorimetry, thereby improving the adhesiveness of the binder and securing rapid charging and/or normal (room temperature) life characteristics of the electrode.

The melting enthalpy (ΔHₘ) of the binder measured by differential scanning calorimetry is 230 J/g or higher, and may be specifically 230 to 300 J/g, 240 to 290 J/g, or 250 to 260 J/g.

By controlling the melting enthalpy of the binder within the above range, the crystallinity of the polymer is effectively controlled, so that the adhesive properties are excellent, and the lifespan properties may be improved due to the reduction in detachment.

The differential scanning calorimetry (DSC) may specifically be modulated differential scanning calorimetry (modulated DSC, MDSC), and more specifically, may be temperature-modulated differential scanning calorimetry (temperature-modulated DSC, TMDSC).

Specifically, the melting enthalpy may be measured by scanning at a heating rate of 10°C using the differential scanning calorimetry (DSC) mode. More specifically, melting enthalpy may be measured by using differential scanning calorimetry (DSC) for the first scan or the second scan. In the present disclosure, the melting enthalpy may be measured by using DSC for the first scan of the polyester film.

From the heat flow curve obtained by scanning, the glass transition temperature (Tg), crystallization temperature (Tc), and melting temperature (Tm) may be confirmed.

Specifically, in the heat flow curve obtained by scanning, the first endothermic temperature is the glass transition temperature (Tg), the exothermic temperature measured after the glass transition temperature (Tg) is the crystallization temperature (Tc), and the endothermic temperature measured after the crystallization temperature (Tc) may be the melting temperature (Tm).

At this time, the integral value at the melting temperature (Tm) was calculated as the melting enthalpy. Specifically, the melting enthalpy was calculated by converting the integral value of the peak according to the baseline, by setting the trend line from the melting start temperature to the complete melting temperature to be baseline as the energy in the section where heat absorption occurs in the heat flow curve of the differential scanning calorimeter.

Meanwhile, the crystallinity of the binder may be 10 to 80%. In an embodiment, when the binder has the crystallinity in the above-mentioned range, the electrolyte absorption rate of the binder resin may be controlled to lower the resistance of the anode, while preventing the phenomenon of the binder being hardened and the adhesive strength between the anode current collector and the anode composite layer being lowered.

In the case of a binder satisfying the above range, it may have sufficient crystallinity so as not to lower the resistance characteristics. Therefore, as a result, the adhesive strength between the anode current collector and the anode composite layer may be improved, and low resistance characteristics may be secured.

In an embodiment, the crystallinity is expressed as a % by dividing the melting enthalpy (ΔHₘ) value actually measured in the differential scanning calorimetry by the melting enthalpy (ΔHₘ) value of a theoretical perfect crystal (crystallization degree of 100%). Here, the melting enthalpy value of a theoretical perfect crystal may be found and used in the polymer handbook for known polymers, and may be calculated by an extrapolation method that extends the crystallinity by two or more points for unknown or newly synthesized materials.

The binder of an embodiment may have a first absorbance peak appearing at 1725 to 1745 cm⁻¹ and a second absorbance peak appearing at 1745 to 1760 cm⁻¹ in the FT-IR spectrum. The absorbance peak of the present disclosure is based on the measurement by correcting the baseline by adjusting the absorbance in the FT-IR spectrum analysis region of 2000 to 600 cm⁻¹ to O.

The first absorbance peak appearing at 1725 to 1745 cm⁻¹ described above may refer to a peak appearing in the ester functional group of the binder in the FT-IR spectrum obtained by the FT-IR spectrophotometer.

In addition, the second absorbance peak appearing at 1745 to 1760 cm⁻¹ described above may refer to a peak appearing in the ester functional group linked to the ketone of the binder in the FT-IR spectrum obtained by the FT-IR spectrophotometer.

When the peak observed during the FT-IR measurement of the binder of an embodiment satisfies the above range, it can be confirmed that the crosslinking of the composition included in the binder has progressed. Accordingly, the adhesive strength between the anode composite layer to which the binder of an embodiment is applied and the anode current collector may be improved.

The binder of an embodiment may be a crosslinked product of polyvinyl alcohol (PVA) and polyacrylic acid (PAA). Through the interaction between the carboxyl group contained in the polyacrylic acid and the electrolyte, a solid electrolyte interphase (SEI) layer may be formed on the surface of the silicon-based active material. Accordingly, irreversible decomposition of the electrolyte may be blocked while excessive expansion of the silicon-based active material may be suppressed. In addition, since the binder includes polyvinyl alcohol together, the formation of the SEI layer through hydrophilic interaction may be further promoted.

The molar ratio of the polyvinyl alcohol and the polyacrylic acid contained in the binder may be 1:0.6 to 1:1.2, and specifically, 1:0.8 to 1:1. When the molar ratio of the polyacrylic acid to the polyvinyl alcohol contained in the binder is out of the above range, the binder effect due to crosslinking decreases and may act as a resistor.

The binder may further include one or more polymers selected from the group consisting of polyvinyl alcohol, polyacrylic acid, polyvinyl acrylic, polyacrylonitrile, polyacrylamide, polyvinyl acetate, and the like.

The anode composite layer may include an anode active material. A material capable of adsorbing and desorbing lithium ions may be used as the anode active material. For example, the anode active material may be a carbon-based material such as crystalline carbon, amorphous carbon, a carbon composite, carbon fiber or the like; lithium metal; lithium alloy; a silicon (Si)-containing material, a tin (Sn)-containing material, or the like.

Examples of the amorphous carbon may include hard carbon, soft carbon, coke, mesocarbon microbeads (MCMB), mesophase pitch-based carbon fibers (MPCF), and the like.

Examples of the crystalline carbon may include graphite-based carbons such as natural graphite, artificial graphite, graphitized coke, graphitized MCMB, graphitized MPCF and the like.

Examples of the lithium metal may include pure lithium metal or lithium metal having a protective layer formed thereon for suppressing dendrite growth, and the like. In an embodiment, a lithium metal-containing layer deposited or coated on an anode current collector may be used as an anode active material layer. In an embodiment, a lithium thin film layer may be used as an anode active material layer.

The elements included in the lithium alloy may include aluminum, zinc, bismuth, cadmium, antimony, silicon, lead, tin, gallium, indium or the like.

The silicon-containing material may provide relatively increased capacity characteristics. The silicon-containing material may include Si, SiOx(0<x<2), metal-doped SiOx(0<x<2), a silicon-carbon composite, or the like. The metal may include lithium and/or magnesium, and the metal-doped SiOx(0<x<2) may include metal silicate.

The conductive material is used to provide conductivity to the electrode and maintain the structure of the electrode and the like, and a conductive material that does not cause side reactions with other elements of the secondary battery may be used. For example, there may be graphite such as natural graphite, artificial graphite or the like; a carbon-based material such as carbon black, acetylene black, Ketjen black, channel black, furnace black, lamp black, thermal black, carbon fiber or the like; metal powder or metal fiber such as copper, nickel, aluminum, silver, or the like; conductive whiskey such as zinc oxide potassium titanate, or the like; conductive metal oxide such as titanium oxide or the like; or a conductive polymer such as polyphenylene derivatives or the like, and one thereof alone or a mixture of two or more may be used. Specifically, it may include at least one selected from the group consisting of a single-walled carbon nanotube (SWCNT), a thin-walled carbon nanotube (TWCNT), a multi-walled carbon nanotube (MWCNT), carbon fiber, and graphene.

The thickness of the anode composite layer may be 80 to 130 µm, and specifically, 100 to 120 µm. If the thickness of the anode composite layer is less than 80 µm, scratching of the active material or tearing of the current collector may occur during the coating process, and if it exceeds 130 µm, excessive use of the binder may result in a decrease in the effect of the invention.

An anode of an embodiment may be manufactured by mixing an anode active material, a conductive material, and a binder to manufacture an anode composite layer, and then applying the anode composite layer to an anode current collector, drying, and rolling.

At this time, the drying may include first drying and second drying. The first drying may be 25°C or higher, specifically 80°C or higher, more specifically 100°C or higher, 200°C or lower, specifically 180°C or lower, and more specifically 150°C or lower. When the first drying temperature of the anode composite layer is within the above range, the adhesive strength between the anode composite layer and the anode current collector may increase.

In addition, the second drying may be 25°C or higher, specifically 80°C or higher, more specifically 100°C or higher, 200°C or lower, specifically 180°C or lower, and more specifically 150°C or lower. When the second drying temperature of the anode composite layer is within the above range, the adhesive strength between the anode composite layer and the anode current collector may increase.

A lithium secondary battery of an embodiment includes: an anode for a lithium secondary battery; a cathode; and a separator provided between the anode and the cathode.

The lithium secondary battery may be manufactured in a cylindrical shape, a prismatic shape, a pouch shape, a coin shape, or the like, for example, using a can.

### Mode for Invention

### Example

Hereinafter, the embodiments of the present disclosure will be additionally described with reference to specific experimental examples. The examples and comparative examples included in the experimental examples are only illustrative of the present disclosure and do not limit the scope of the appended claims. It is obvious to those skilled in the art that various changes and modifications to the examples are possible within the scope and technical idea of the present disclosure, and it is also natural that such changes and modifications fall within the scope of the appended claims. **1. Binder Evaluation**

### (1) Manufacturing of Binder Specimen

### Example 1

An aqueous solution containing 49 wt% of PAA and 51 wt% of PVA was placed in a weighing dish and underwent first drying in an oven at 120°C for 2 hours to prepare a solid PAA-PVA copolymer. After that, the solid PAA-PVA copolymer underwent second drying in an oven at 100°C for 2 hours to prepare a binder specimen.

### Example 2

A binder specimen was manufactured in the same manner as in Example 1, except that the second drying temperature was 120°C.

### Comparative Example 1

A binder specimen was manufactured in the same manner as in Example 1, except that the second drying temperature was 25°C.

### Comparative Example 2

A binder specimen was manufactured in the same manner as in Example 1, except that the second drying temperature was 60°C.

### Comparative Example 3

A binder specimen was manufactured in the same manner as in Example 1, except that the second drying temperature was 80°C.

### Comparative Example 4

A binder specimen was manufactured in the same manner as in Example 1, except that the second drying temperature was 150°C.

### Comparative Example 5

A binder specimen was manufactured in the same manner as in Example 1, except that the second drying temperature was 200°C.

### (2) Measurement of Melting Enthalpy (ΔHₘ)

The binder specimens manufactured according to Examples 1 and 2 and Comparative Examples 1 to 4 were placed in a differential scanning calorimetry (Q2000, manufacturer: TA Instruments) and scanned at a heating rate of 10°C using the differential scanning calorimetry (DSC) mode.

In the heat flow curve obtained by scanning, the first endothermic temperature is the glass transition temperature (Tg), the exothermic temperature measured after the glass transition temperature (Tg) is the crystallization temperature (Tc), and the endothermic temperature measured after the crystallization temperature (Tc) is measured as the melting temperature (Tm).

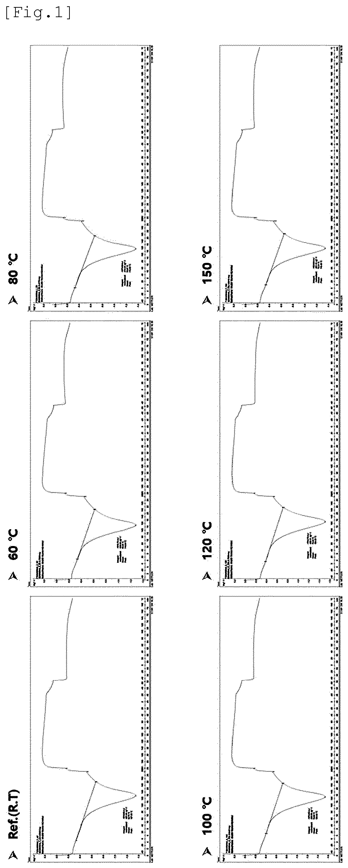

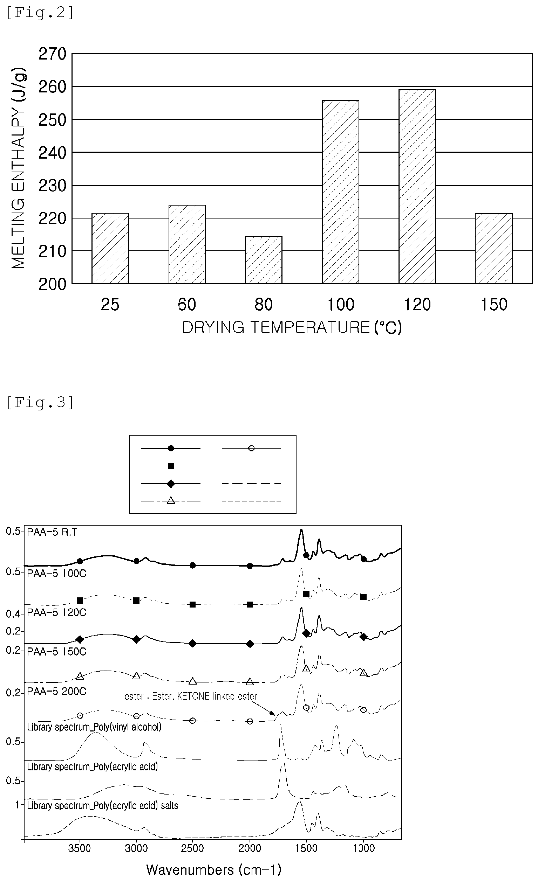

FIG. 1 shows DSC curves according to the results of differential scanning calorimetry (DSC) analysis for the binder specimens manufactured according to Examples 1 and 2 and Comparative Examples 1 to 4, and FIG. 2 shows the values of melting enthalpy (ΔHₘ) compared according to the DSC curves of FIG. 1.

Referring to the results of Examples 1 and 2 of FIG. 2, it can be confirmed that the melting enthalpy (ΔHₘ) is 230 J/g or higher, so the crystallinity is high, and thus the crystallization progress of the polymer included in the binder is high.

On the other hand, referring to the results of Comparative Examples 1 to 4, it can be confirmed that the melting enthalpy (ΔHₘ) is 230 J/g or less, so the crystallinity is low, and thus the crystallization progress of the polymer included in the binder is low.

### (3) FT-IR Analysis

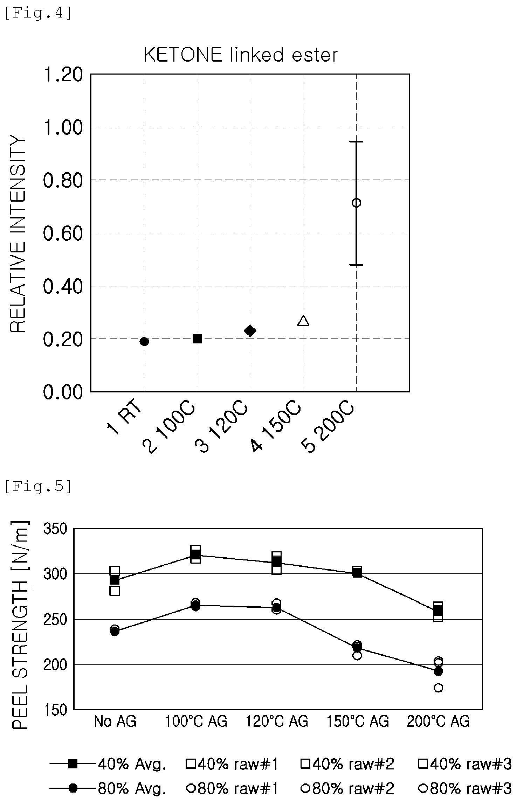

FIG. 3 shows the results of Fourier-transform infrared spectroscopy (FT-IR) measurement for binder specimens manufactured according to Examples 1 and 2 and Comparative Examples 4 and 5, and FIG. 4 shows the relative intensity according to the FT-IR measurement results of FIG. 3.

Referring to the results of FIG. 3, it can be confirmed that as the second drying temperature increases, the wavelength region of 1725 to 1745 cm⁻¹ representing the Ester Bend and the wavelength region of 1745 to 1760 cm⁻¹ representing the Ester Bend linked to Ketone increase. In detail, it can be confirmed that as the second drying temperature increases, the crosslinking degree of the polymer included in the binder increases.

### 2. Anode Evaluation

### (1) Anode Manufacturing

### Example 3

An aqueous solution binder containing graphite and Si anode active materials, SWCNT conductive agent, and PAA and PVA in a weight ratio of 49:51 was mixed in a weight ratio of 97.75:0.25:2, to manufacture an anode composite layer.

The anode composite layer was uniformly applied on copper foil with a loading weight of 8 mg/cm², dried twice at a first drying temperature of 120°C and a second drying temperature of 100°C, and then rolled to manufacture an anode.

### Example 4

An anode was manufactured in the same manner as in Example 3 except that the second drying temperature was 120°C.

### Comparative Example 6

An anode was manufactured in the same manner as in Example 3 except that the second drying was not performed.

### Comparative Example 7

An anode was manufactured in the same manner as in Example 3 except that the second drying temperature was 150°C.

### Comparative Example 8

An anode was manufactured in the same manner as in Example 3 except that the second drying temperature was 200°C.

### (2) SAICAS Analysis

For the anodes manufactured according to Examples 3 and 4 and Comparative Examples 6 to 8, FIG. 5 shows the results of the SAICAS analysis.

Referring to the results of FIG. 5, it can be confirmed that crystallization proceeds at a second drying temperature of 100 to 120°C, resulting in excellent adhesive strength.

On the other hand, when second drying is not performed or second drying is performed at a high temperature, it can be confirmed that the adhesive strength decreases beyond the temperature at which crystallization proceeds.

The contents described above are merely examples of applying the principles of the present disclosure, and other configurations may be further included without departing from the scope of the present disclosure.

## Claims

1. An anode for a lithium secondary battery comprising:
an anode current collector; and
an anode composite layer including a silicon-based anode active material and a binder on the anode current collector,
wherein the binder is a crosslinked polymer including an ester bond, and has a melting enthalpy (ΔHₘ) of 230 J/g or higher, measured by differential scanning calorimetry (DSC).

2. The anode for a lithium secondary battery of claim 1, wherein the binder has a first absorbance peak appearing at 1725 to 1745 cm⁻¹ and a second absorbance peak appearing at 1745 to 1760 cm⁻¹ in an FT-IR spectrum.

3. The anode for a lithium secondary battery of claim 1, wherein the binder is a crosslinked product of polyvinyl alcohol (PVA) and polyacrylic acid (PAA).

4. The anode for a lithium secondary battery of claim 3, wherein a molar ratio of polyvinyl alcohol and polyacrylic acid included in the crosslinked product is 1:0.6 to 1:1.2.

5. The anode for a lithium secondary battery of claim 1, wherein the binder further comprises at least one polymer selected from the group consisting of polyvinyl alcohol, polyacrylic acid, polyvinyl acrylic, polyacrylonitrile, polyacrylamide, and polyvinyl acetate.

6. The anode for a lithium secondary battery of claim 1, wherein the silicon-based anode active material comprises silicon (Si), a silicon alloy, a silicon oxide, a silicon-carbon (Si-C) composite, a silicon alloy (Si-alloy)-based carbon composite, or a mixture thereof.

7. The anode for a lithium secondary battery of claim 1, wherein the anode composite layer further comprises a carbon-based anode active material.

8. The anode for a lithium secondary battery of claim 7, wherein the carbon-based anode active material is at least one selected from the group consisting of artificial graphite and natural graphite.

9. The anode for a lithium secondary battery of claim 1, wherein the anode composite layer further comprises a conductive material.

10. The anode for a lithium secondary battery of claim 9, wherein the conductive material is at least one selected from the group consisting of a single-walled carbon nanotube (SWCNT), a thin-walled carbon nanotube (TWCNT), a multi-walled carbon nanotube (MWCNT), carbon fiber, and graphene.

11. The anode for a lithium secondary battery of claim 1, wherein a thickness of the anode composite layer is 80 to 130 µm.

12. A lithium secondary battery comprising:
the anode for a lithium secondary battery of any one of claims 1 to 11;
a cathode; and
a separator provided between the anode and the cathode.
